# EUROPEAN PATENT APPLICATION

(11) **EP 4 174 563 A1**
(43) Date of publication of application: **03.05.2023**
(21) Application number: 21827866.1
(22) Date of filing: 21.06.2021
(51) Int. Cl.: G02F 1/1506, G02F 1/155, G03B 21/62

(54) **ELECTROCHEMICAL DEVICE AND SUBSTRATE WITH ELECTRODE**

(30) Priority: 24.06.2020 JP 2020109101
(71) Applicant: STANLEY ELECTRIC CO., LTD., Tokyo 153-8636 (JP)
(72) Inventor: HASEGAWA, Yuki, Tokyo 153-8636 (JP); HIRANO, Tomoya, Tokyo 153-8636 (JP)
(74) Representative: Klang, Alexander H.
(86) International application number: PCT/JP2021/023370
(87) International publication number: WO 2021/261432

(57) **Abstract**

An electrochemical device includes an electrolyte layer containing an electrodepositable material including Ag and a mediating material including any of Ta, Mo, and Nb, a pair of substrates to hold the electrolyte layer therebetween, and a pair of electrodes that are disposed on the mutually opposed surfaces of the respective substrates and are insoluble in the electrolyte layer.

## Description

### Technical Field

The present disclosure relates to an electrochemical device that can be switched between a mode of reflecting light and a mode of not reflecting light, and an electrode-mounted substrate included in this electrochemical device.

### Background Art

Development of electrochemical devices has been advanced that can be switched between a mode (reflective mode) of reflecting light and a mode (non-reflective mode) of not reflecting light, for example, a mode of transmitting light. In general, such electrochemical devices include at least an electrolyte layer containing an electrodepositable material made of Ag and a mediating material made of Cu, and a pair of electrodes that hold the electrolyte layer therebetween and allow a voltage to be applied to the electrolyte layer. The pair of electrodes are typically made of indium tin oxide (ITO) or indium zinc oxide (IZO).

The electrochemical device is normally in a non-reflective mode. When a voltage is applied via the pair of electrodes to the electrolyte layer, a redox reaction causes Ag in the electrodepositable material to be deposited in the form of a light reflecting film on one of the pair of electrodes. The electrochemical device is thus switched to a reflective mode. In response to stop of voltage application to the electrolyte layer, the deposited light reflecting film is dissolved into the electrolyte layer and disappears, so that the electrochemical device is switched to the non-reflective mode again.

A typical example of the electrodepositable material is a material made of Ag. A typical example of the mediating material is a material made of Cu, which induces a redox reaction at a lower electrochemical energy than Ag. The disappearance of Ag due to oxidation is considered to be assisted by transfer of electrons from Ag to an oxidant in the mediating material.

Unexamined Japanese Patent Application Publication No. 2018-017781 discloses an electrochemical device that includes an electrolyte layer containing a mediating material made of Ta, instead of Cu. Unexamined Japanese Patent Application Publication No. 2018-017781 recites that the electrolyte layer containing the mediating material made of Ta is colorless and transparent, in contrast to a yellowish electrolyte layer containing a mediating material made of Cu.

### Summary of Invention

### Technical Problem

The present inventors have found a problem that an exemplary electrolyte layer containing a mediating material made of Ta may dissolve a pair of electrodes made of a material, such as ITO or IZO, containing indium.

A main objective of the present disclosure, which has been accomplished in view of the above problem, is to provide an electrochemical device that can maintain an electrolyte layer to be colorless, prevent electrodes form being dissolved in the electrolyte layer, and achieve improved long-term reliability.

### Solution to Problem

In order to solve the above problem, an optical device according to an aspect of the present disclosure includes an electrolyte layer containing an electrodepositable material including Ag and a mediating material including any of Ta, Mo, and Nb, a pair of substrates to hold the electrolyte layer therebetween, and a pair of electrodes that are disposed on the mutually opposed surfaces of the respective substrates and are insoluble in the electrolyte layer.

### Advantageous Effects of Invention

The optical device having the above-descried configuration can maintain the electrolyte layer to be colorless and can prevent the electrodes form being dissolved in the electrolyte layer. This device can therefore achieve improved long-term reliability.

### Brief Description of Drawings

FIG. 1 is a sectional view of an electrochemical device according to an embodiment;
FIG. 2 is a plan view of the electrochemical device according to the embodiment;
FIG. 3 is a sectional view of an electrochemical device according to a modification of the embodiment; and
FIGS. 4A and 4B are perspective views respectively illustrating an exemplary application of the electrochemical device to a combiner of a head-up display and an exemplary application of the electrochemical device to an ND filter for a head-up display.

### Description of Embodiments

### Structure and configuration

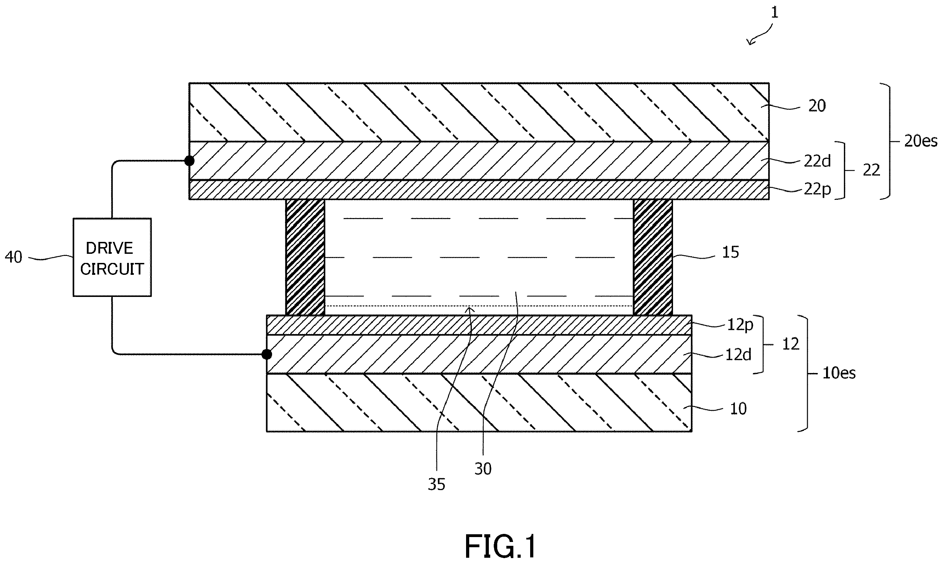

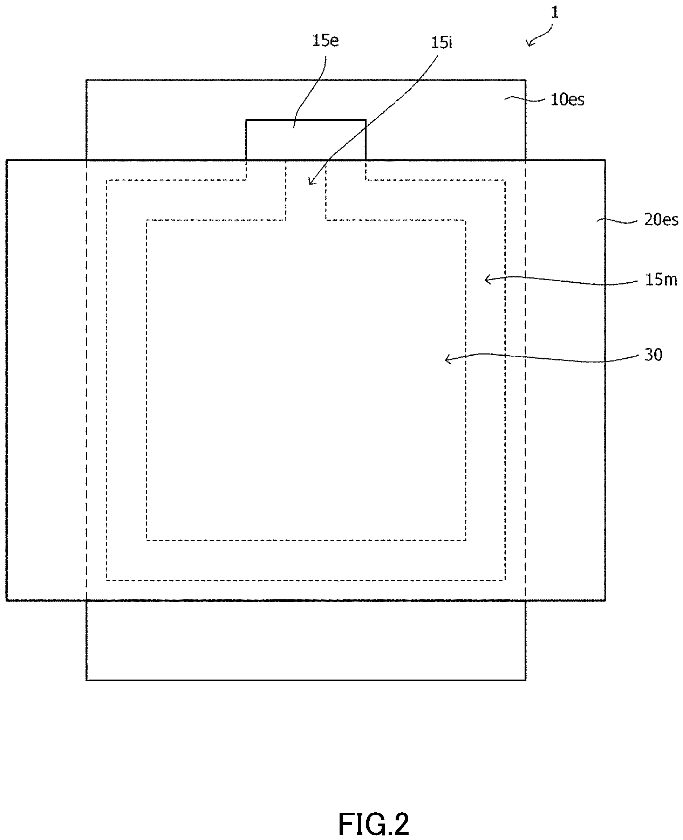

First, a structure and a configuration of an electrochemical device 1 according to the embodiment is described with reference to the accompanying drawings. FIG. 1 is a sectional view of the electrochemical device 1, and FIG. 2 is a plan view of the electrochemical device 1.

As illustrated in FIG. 1, the electrochemical device 1 mainly includes an electrolyte layer 30 containing an electrodepositable material made of Ag and a mediating material made of Ta, for example, a pair of substrates 10 and 20 to hold the electrolyte layer 30 therebetween, and a pair of electrodes 12 and 22 disposed on the mutually opposed surfaces of the substrates 10 and 20.

One of the pair of substrates 10 and 20 may be hereinafter referred to as "lower substrate 10", and the other may be referred to as "upper substrate 20". One of the pair of electrodes 12 and 22 may be referred to as "lower electrode 12" or "first electrode 12", and the other may be referred to as "upper electrode 22" or "second electrode 22". The lower substrate 10 and the lower electrode 12 may be collectively referred to as "lower electrode-mounted substrate 10es", and the upper substrate 20 and the upper electrode 22 may be collectively referred to as "upper electrode-mounted substrate 20es".

The electrolyte layer 30 further contains a supporting electrolyte and a solvent, in addition to the electrodepositable material and the mediating material. The electrodepositable material is a material including Ag, for example, AgNO₃, AgClO₄, or AgBr. The supporting electrolyte is a material for promoting a redox reaction of the electrodepositable material, for example, a chloride, such as LiCl, KCl, or NaCl, or a bromide, such as LiBr, KBr, or NaBr. The solvent is a material for stably retaining the electrodepositable material, for example, N, N-dimethylacetamide (DMA) or dimethyl sulfoxide (DMSO).

A typical example of the mediating material is a material including Ta. The mediating material including Ta can make the electrolyte layer 30 substantially colorless and transparent. The studies conducted by the present inventors have revealed that not only the mediating material including Ta disclosed in Unexamined Japanese Patent Application Publication No. 2018-017781 but also mediating materials including Mo or Nb can improve the transparency of the electrolyte layer 30. Specific examples of the mediating material include TaCl₅, MoCl₅, and NbCls.

The lower electrode 12 includes a conductive layer 12d made of ITO, and a protective layer 12p disposed over the main functional surface of the conductive layer 12d. The protective layer 12p contains a material hardly soluble in the electrolyte layer 30, more preferably, a material insoluble in the electrolyte layer 30. Specifically, the protective layer 12p may contain a material insoluble in the electrolyte layer 30, which contains a mediating material made of any of Ta, Mo, and Nb. Examples of such an insoluble material include electrically conductive oxides, such as fluorine tin oxide (FTO), antimony tin oxide (ATO), and SnOz, electrically conductive polymers, such as polypyrrole and poly (3,4-ethylene dioxythiophene) (PEDOT), and electrochromic materials, such as IrOₓ, MnOₓ, CrOₓ, NiOₓ, and WOₓ (where x is any positive integral number).

The upper electrode 22 also includes a conductive layer 22d made of ITO, and a protective layer 22p containing a material insoluble in the electrolyte layer 30, like the lower electrode 12. The conductive layer 12d and the protective layer 12p of the lower electrode 12 may be respectively referred to as "first conductive layer 12d" and "first protective layer 12p". The conductive layer 22d and the protective layer 22p of the upper electrode 22 may be respectively referred to as "second conductive layer 22d" and "second protective layer 22p".

In general, the pair of electrodes are made of ITO. The present inventors have found that the pair of electrodes made of ITO are unintentionally dissolved in the electrolyte layer 30 containing a mediating material including any of Ta, Mo, and Nb.

The present inventors carried out an exemplary experiment that involves immersing an ITO film for 100 hours in an electrolyte solution at a temperature of 60°C provided with a molybdenum chloride, serving as the mediating material, at a concentration of 10 mM. The result of this experiment confirmed that the immersing process reduced the thickness of the ITO film from 365 nm to 340 nm. This reduction is supposed to be caused by partial dissolution of the ITO film into the electrolyte solution.

In contrast, no reduction was observed in the thickness of an insoluble film made of the above-mentioned insoluble material, such as FTO, in another experiment that involves immersing for seven days the insoluble film in an electrolyte solution at a temperature of 70°C provided with a molybdenum chloride, serving as the mediating material, at a concentration of 10 mM. In view of these results of experiments, the insoluble film is defined herein as a film of which a reduction in the film thickness is 15 nm or smaller after a process of immersing the film in an N, N-dimethylacetamide solution provided with a 10-mM molybdenum chloride (MoCls) in an environment at 70°C for seven days (168 hours).

The pair of electrodes 12 and 22 can be prevented from being dissolved in the electrolyte layer 30 by providing the protective layers 12p and 22p hardly soluble in the electrolyte layer 30 to the sections of the electrodes 12 and 22 in contact with the electrolyte layer 30. Although the pair of electrodes 12 and 22 may be respectively made of the protective layers 12p and 22p alone, the electrodes 12 and 22 preferably have laminated structures respectively including the conductive layers 12d and 22d made of ITO and the protective layers 12p and 22p having a thickness of approximately 10 to 30 nm, in terms of electrical conductivity and readiness of formation (patterning).

The pair of substrates 10 and 20 are glass substrates or plastic substrates having light permeability, for example. The distance between the pair of substrates 10 and 20 or the thickness of the electrolyte layer 30 is approximately 40 to 1,000 µm.

### Functions and operations

Functions and operations of the electrochemical device 1 are then described. The electrochemical device 1 is normally in a mode (permeable mode) of transmitting light. For example, when light is incident from the lower substrate 10, the light penetrates through the lower electrode 12, the electrolyte layer 30, and the upper electrode 22, and then exits from the upper substrate 20.

A voltage is applied between the lower electrode 12 and the upper electrode 22 from a drive circuit 40. For example, a DC voltage from -2.0 to -2.8 V determined with respect to the electric potential of the upper electrode 22 is applied to the lower electrode 12. This voltage application causes an Ag film 35 serving as a light reflecting film to be deposited on the surface of the lower electrode 12. The electrochemical device 1 is thus switched to a mode (reflective mode) of reflecting light. For example, when light is incident from the lower substrate 10, the light is reflected by the Ag film 35 on the surface of the lower electrode 12 and exits from the lower substrate 10.

The Ag film on the surface of the lower electrode 12 is dissolved in the electrolyte layer 30 and disappears when a DC voltage from 0 to 0.5 V determined with respect to the electric potential of the upper electrode 22 is applied to the lower electrode 12. The electrochemical device 1 is thus switched to the permeable mode again.

In the electrochemical device 1 according to the embodiment, the electrolyte layer 30 contains a mediating material including any of Ta, Mo, and Nb and thus has high transparency. The electrochemical device 1 can therefore achieve an excellent permeable mode. The protective layers 12p and 22p hardly soluble in the electrolyte layer 30 provided to the sections of the respective electrodes 12 and 22 in contact with the electrolyte layer 30 can prevent the electrodes 12 and 22 from being dissolved in the electrolyte layer 30. The electrochemical device 1 can therefore achieve improved long-term reliability.

### Fabrication method

The following description is directed to an exemplary method of fabricating the electrochemical device 1. In this exemplary fabrication method, the electrochemical device 1 includes the electrolyte layer 30 containing a molybdenum chloride as a mediating material, and the protective layers 12p and 22p of the pair of electrodes 12 and 22 that are made of FTO.

The first process is to fabricate the lower electrode-mounted substrate 10es. A soda-lime glass substrate having a thickness of 0.7 mm is prepared as the lower substrate 10. The entire surface of the lower substrate 10 is then provided with an SiOz film by spattering. The lower substrate 10 is then provided with an ITO film having a thickness of approximately 365 nm to serve as the conductive layer 12d, and an FTO film having a thickness of approximately 20 nm to serve as the protective layer 12p in sequence.

This process completes the lower electrode-mounted substrate 10es. The upper electrode-mounted substrate 20es is fabricated in the same manner.

As illustrated in FIG. 2, the main functional surface of the lower electrode-mounted substrate 10es is provided with a primary sealing member 15m having a frame shape. The primary sealing member 15m has an inlet 15i, through which an electrolyte solution is to be infused in the following step.

The primary sealing member 15m is formed into a desired shape of a flat plane by screen printing. The primary sealing member 15m contains a UV curable resin TB3035B manufactured by ThreeBond Co., Ltd., for example. The primary sealing member 15m also contains glass bead spacers having a diameter of 100 µm at a concentration of approximately 3 wt%.

Then, glass bead spacers having a diameter of 100 µm are distributed in the region of the lower electrode-mounted substrate 10es surrounded by the primary sealing member 15m. The upper electrode-mounted substrate 20es is then bonded to the lower electrode-mounted substrate 10es. The distance between the lower electrode-mounted substrate 10es and the upper electrode-mounted substrate 20es is defined by the glass bead spacers to be approximately 100 µm.

An electrolyte solution to constitute the electrolyte layer 30 is then infused through the inlet 15i into the space between the lower electrode-mounted substrate 10es and the upper electrode-mounted substrate 20es by vacuum infusion. The solvent of the electrolyte solution contains dimethylacetamide (DMA) that maintains the liquid phase within a temperature range of -20°C to 100°C. The solvent also contains AgBr at a concentration of 200 mM to serve as the electrodepositable material, LiBr at a concentration of 800 mM to serve as the supporting electrolyte, and MoCl₅ (Mo is pentavalent molybdenum) at a concentration of 30 mM to serve as the mediating material.

The inlet 15i is then closed by an end sealing member 15e, followed by curing of the primary sealing member 15m and the end sealing member 15e. The end sealing member 15e contains a UV curable resin TB3035B manufactured by ThreeBond Co., Ltd., for example. The primary sealing member 15m and the end sealing member 15e constitute a sealing frame member 15.

The above-described processes complete the electrochemical device 1. Examples of the mediating material of the electrolyte layer 30 also include TaCl₅ and NbCl₅, as well as MoCl₅.

The protective layers 12p and 22p may contain not only FTO but also an electrically conductive oxide, such as ATO or SnOz, or an electrochromic material, such as IrOₓ, MnOₓ, CrOₓ, NiOₓ, or WOₓ. The protective layers 12p and 22p may also contain an electrically conductive polymer, such as polypyrrole or PEDOT. Such an electrically conductive polymer can be provided on the conductive layers 12d and 22d by an electrodeposition technique, for example.

### Modification

Although the lower electrode 12 and the upper electrode 22 are disposed on the entire surfaces of the lower substrate 10 and the upper substrate 20 in the above-described embodiment, the lower electrode 12 and the upper electrode 22 may also be selectively provided on the surfaces of the lower substrate 10 and the upper substrate 20. The following description of a modification of the embodiment is directed to an electrochemical device in which the lower electrode 12 and the upper electrode 22 have a desired shape of a flat plane.

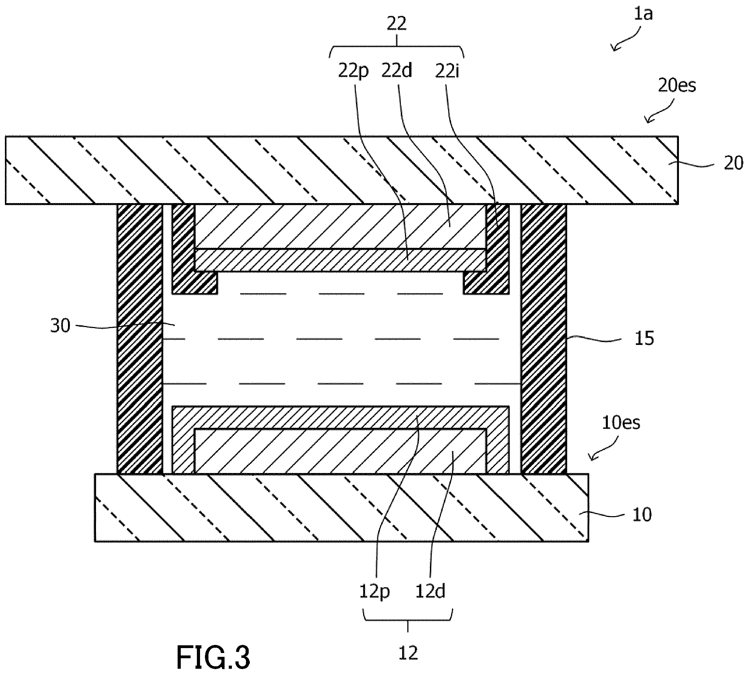

FIG. 3 is a sectional view of an electrochemical device 1a according to the modification. The electrochemical device 1a according to the modification has the same structure and configuration as those of the electrochemical device 1 according to the above-described embodiment, except for the flat plane shapes and laminated structures of the lower electrode 12 and the upper electrode 22.

In the electrochemical device 1a, the lower electrode 12 is selectively provided on the surface of the lower substrate 10 and is disposed within the region defined by the sealing frame member 15. The main functional surface and the side surfaces of the conductive layer 12d are covered with the protective layer 12p in the electrochemical device 1a. The protective layer 12p hardly soluble in the electrolyte layer 30 protects the conductive layer 12d made of ITO and can therefore prevent the lower electrode 12 from being dissolved in the electrolyte layer 30.

The lower electrode-mounted substrate 10es according to the modification can be fabricated by the following process, for example. First, the surface of the lower substrate 10, such as glass substrate or plastic substrate, is provided with the conductive layer 12d made of ITO by spattering, for example. The conductive layer 12d is then patterned to have a desired shape of a flat plane by photolithography, for example. The main functional surface and the side surfaces of the conductive layer 12d are then provided with the protective layer 12p made of FTO by a liftoff technique, for example. This process completes the lower electrode-mounted substrate 10es according to the modification.

In the electrochemical device 1a, the upper electrode 22 is also selectively provided on the surface of the upper substrate 20 and is disposed within the region defined by the sealing frame member 15. The main functional surface of the conductive layer 22d is covered with the protective layer 22p and the side surfaces of the conductive layer 22d are covered with an insulating member 22i made of a material, such as SiOz, an epoxy resin, or polyimide, hardly soluble in the electrolyte layer 30, in the electrochemical device 1a. The protective layer 22p and the insulating member 22i hardly soluble in the electrolyte layer 30 protect the conductive layer 22d made of ITO and can therefore prevent the upper electrode 22 from being dissolved in the electrolyte layer 30. Alternatively, the side surfaces of the conductive layer 22d of the upper electrode 22 may be covered with the sealing frame member 15.

The upper electrode-mounted substrate 20es according to the modification can be fabricated by the following process, for example. First, the surface of the upper substrate 20, such as glass substrate or plastic substrate, is provided with the conductive layer 22d made of ITO, and the protective layer 22p made of FTO to cover the main functional surface of the conductive layer 22d, by a liftoff technique, for example. The side surfaces of the conductive layer 22d and the protective layer 22p are then provided with the insulating member 22i made of SiOz by a liftoff technique, for example. Alternatively, the side surfaces of the conductive layer 22d and the protective layer 22p may be provided with the insulating member 22i made of an epoxy resin, by screen printing, for example. This process completes the upper electrode-mounted substrate 20es according to the modification.

### Other modifications

The above-described embodiment and modification thereof are directed to the electrochemical device that achieves the permeable mode as a non-reflective mode. Alternatively, the electrochemical device may be modified to achieve a mode (black mode) of absorbing light as a non-reflective mode, by replacing one of the pair of substrates 10 and 20 with a substrate absorbing visible light, for example. Alternatively, one of the pair of electrodes 12 and 22 may be an electrode that is insoluble in the electrolyte layer 30 and has no light permeability, for example, a black electrode made of carbon.

Although the Ag layer serving as a light reflecting layer is formed on the flat electrode in the above-described embodiment and modification thereof, a dimming layer may also be formed instead of the light reflecting layer. The Ag layer can show a black color if the underlaying electrode has protrusions and recesses having diameters smaller than the order of microns. The Ag layer can also show a white color if the underlying electrode has protrusions and recesses having diameters equal to or larger than the order of microns.

### Exemplary applications

The electrochemical devices 1 and 1a according to the embodiment and the modification thereof can be applied to displays, ND filters, and other apparatuses, like those disclosed in Unexamined Japanese Patent Application Publication No. 2018-017781.

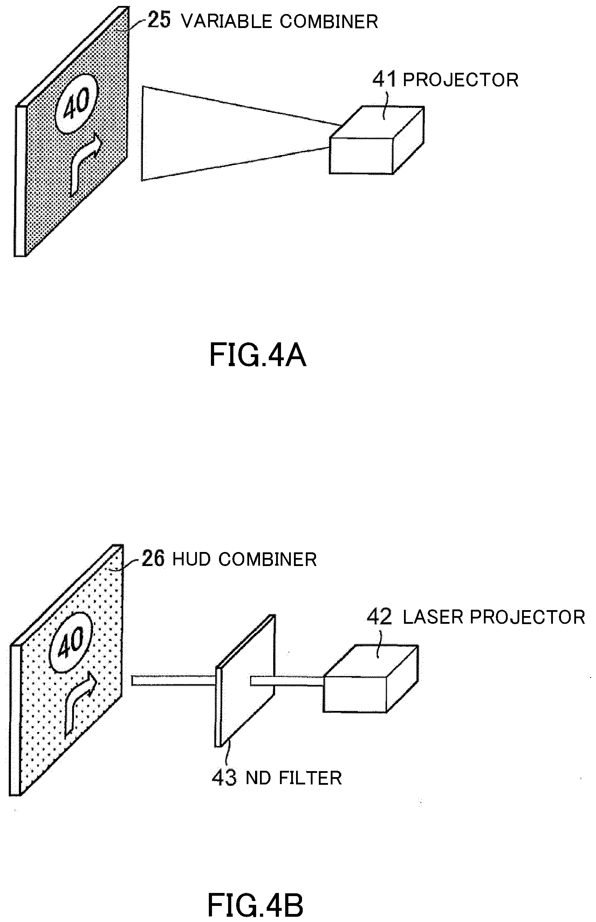

FIG. 4A illustrates an exemplary application of the electrochemical device 1 or 1a to a variable combiner 25 of a head-up display (HUD). The electrochemical device 1 or 1a functioning as the variable combiner 25 is installed on a window of a vehicle, for example, and is normally in a permeable mode. The variable combiner 25 is switched to a reflective mode as required, thereby allowing an image projected from a projector 41 on the variable combiner 25 to be viewed.

FIG. 4B illustrates an exemplary application of the electrochemical device 1 or 1a to an ND filter 43 for an HUD combiner 26 to be used together with a laser projector 42. The electrochemical device 1 or 1a functioning as the ND filter 43 attenuates the light emitted from the laser projector 42, of which the intensity cannot be readily controlled. The electrochemical device 1 or 1a can therefore achieve displays suitable for the ambient brightness.

The above description of the present disclosure does not have any restrictive sense. The illustrated materials, values, and other expressions are not intended to limit the present disclosure. The persons skilled in the art will recognize that various changes may be made, such as modifications, improvements, and combinations.

### Reference Signs List

- 1: Electrochemical device (embodiment)

- 1a: Electrochemical device (modification)
- 10: Lower substrate
- 10es: Lower electrode-mounted substrate
- 12: Lower electrode (first electrode)
- 12d: (First) conductive layer
- 12p: (First) protective layer
- 15: Sealing frame member
- 15m: Primary sealing member
- 15e: End sealing member
- 20: Upper substrate
- 20es: Upper electrode-mounted substrate
- 22: Upper electrode (second electrode)
- 22d: (Second) conductive layer
- 22i: Insulating member
- 22p: (Second) protective layer
- 25: Variable combiner
- 26: HUD combiner
- 30: Electrolyte layer (electrolyte solution)
- 35: Ag film (light reflecting film)
- 40: Drive circuit
- 41: Projector
- 42: Laser projector
- 43: ND filter

## Claims

1. An electrochemical device, comprising:
an electrolyte layer containing an electrodepositable material including Ag, and a mediating material including any of Ta, Mo, and Nb;
a pair of substrates to hold the electrolyte layer therebetween; and
a pair of electrodes disposed on mutually opposed surfaces of the respective substrates, the pair electrodes being insoluble in the electrolyte layer.

2. The electrochemical device according to claim 1, wherein
the pair of electrodes includes a first electrode, the first electrode comprising
a first conductive layer containing indium tin oxide (ITO), and
a first protective layer disposed over a main functional surface of the first conductive layer, the first protective layer being insoluble in the electrolyte layer.

3. The electrochemical device according to claim 2, wherein the first electrode further includes an insulating member disposed over side surfaces of the first conductive layer.

4. The electrochemical device according to claim 2, wherein the first protective layer includes at least one material selected from the group consisting of fluorine tin oxide (FTO), antimony tin oxide (ATO), SnOz, polypyrrole, polypyrrole and poly (3,4-ethylene dioxythiophene) (PEDOT), IrOₓ, MnOₓ, CrOₓ, NiOₓ, and WOₓ.

5. The electrochemical device according to claim 1, wherein
the pair of electrodes includes a second electrode, the second electrode comprising
a second conductive layer containing indium tin oxide (ITO), and
a second protective layer disposed over a main functional surface of the second conductive layer, the second protective layer being insoluble in the electrolyte layer.

6. An electrode-mounted substrate, comprising:
a substrate; and
an electrode disposed on a surface of the substrate, wherein
a reduction in a thickness of the electrode is 15 nm or smaller after a process of immersing the electrode-mounted substrate in an N,N-dimethylacetamide solution at a temperature of 70°C for seven days, the solution containing a molybdenum chloride at a concentration of 10 mM.
